# EUROPÄISCHE PATENTSCHRIFT

(11) **EP 2 285 632 B1**
(45) Veröffentlichungstag und Bekanntmachung des Hinweises auf die Patenterteilung: **24.09.2014**
(21) Anmeldenummer: 09749515.4
(22) Anmeldetag: 24.02.2009
(51) Int. Cl.: B60T 7/22, B60T 17/22

(54) **FAHRERASSISTENZSYSTEM**
DRIVER ASSISTANCE SYSTEM
SYSTÈME D'ASSISTANCE À LA CONDUITE

(30) Priorität: 23.05.2008 DE 102008024929
(43) Veröffentlichungstag der Anmeldung: 23.02.2011
(73) Patentinhaber: WABCO GmbH, 30453 Hannover (DE)
(72) Erfinder: BREUER, Karsten, 31867 Lauenau (DE); HOFFMANN, Guido, 82216 Maisach (DE)
(74) Vertreter: Lauerwald, Jörg
(86) Internationale Anmeldenummer: PCT/EP2009/001280
(87) Internationale Veröffentlichungsnummer: WO 2009/141025

(56) Entgegenhaltungen:
- DE-A1- 10 251 039
- DE-A1- 19 704 890
- DE-A1- 19 856 823
- DE-A1-102005 005 720
- US-A1- 2007 046 449

## Beschreibung

Die Erfindung betrifft ein Fahrerassistenzsystem für einen Kraftwagen, mit (a) einer Fahrgeschwindigkeits-Erfassungsvorrichtung zum Erfassen von Fahrdaten in Form einer Fahrgeschwindigkeit des Kraftwagens, (b) einer Vorderfahrzeug-Erfassungsvorrichtung, die als erste Komponente zumindest eine Videokamera und als zweite Komponente zumindest einen Abstandssensor aufweist, zum Erfassen von Fahrdaten in Form eines Abstands zu einem vor dem Kraftwagen fahrenden Vorderfahrzeug, (c) einer Vorderfahrzeuggeschwindigkeits-Ermittlungsvorrichtung zum Ermitteln einer Vorderfahrzeuggeschwindigkeit des Vorderfahrzeugs, und (d) einer elektrische Ansteuereinheit, die eingerichtet ist, um beim Vorliegen von vorbestimmten Bremsauslöse-Fahrdaten eine autonome Bremsung des Kraftwagens auszulösen und beim Vorliegen von vorbestimmten Bremsabbruch-Fahrdaten die autonome Bremsung des Kraftwagens zu beenden.

Derartige Fahrerassistenzsysteme sind bekannt und dienen dazu, durch eine autonome Bremsung eines Kraftwagens, die auch eine Teilbremsung sein kann, kurz vor einer erwarteten Kollision des Kraftwagens mit dem Vorderfahrzeug die Unfallschwere zu vermindern oder den Unfall ganz zu vermeiden. Um die notwendigen Signale zum Auslösen der autonomen Bremsung zu generieren, ist eine Vorderfahrzeug-Erfassungsvorrichtung bekannt.

Die US20070046449A1 beschreibt ein Fahrerassistenzsystem mit einer Kamera und einem Radarsystem zur Erfassung von Objekten im Fahrweg eines Fahrzeuges. Die DE19856823A1 beschreibt ein Fahrzeugsteuersystem mit einem Laserradar zum Erfassen eines Hindernisses, das sich auf dem Fahrweg des Fahrzeugs vor diesem befindet.

Nachteilig an bekannten Fahrerassistenzsystemen ist, dass die autonome Bremsung abgebrochen wird, wenn die Vorderfahrzeugserfassungsvorrichtung kein Vorderfahrzeug mehr erfasst. Es hat sich gezeigt, dass derartige Fahrerassistenzsysteme häufig zu früh die autonome Bremsung beenden, so dass die Kollisionsgefahr und die potentielle Intensität des Unfalls zunehmen.

Der Erfindung liegt die Aufgabe zugrunde, Nachteile im Stand der Technik zu überwinden.

Die Erfindung löst das Problem durch ein gattungsgemäßes Fahrerassistenzsystem, bei dem die elektrische Ansteuereinheit eingerichtet ist zum Durchführen eines Verfahrens mit den Schritten (i) redundantes Erfassen von Vorderfahrzeug-Fahrdaten des Vorderfahrzeugs und (ii) wenn zumindest eine der Komponenten ausfällt, so dass ein redundantes Erfassen der Vorderfahrzeug-Fahrdaten unmöglich wird, (aa) nicht redundantes Erfassen der Vorderfahrzeug-Fahrdaten (bb) Vergleichen der nicht redundant erfassten Vorderfahrzeug-Fahrdaten mit innerhalb einer vorgegebenen Zeit redundant erfassten Vorderfahrzeug-Fahrdaten und (cc) wenn die nicht redundant erfassten Vorderfahrzeug-Fahrdaten den redundant erfassten Vorderfahrzeug-Fahrdaten entsprechen, Verwenden der nicht redundant erfassten Vorderfahrzeug-Fahrdaten, auf das Vorliegen von Bremsauslöse-Fahrdaten und/oder Bremsabbruch-Fahrdaten zu prüfen.

Vorteilhaft an der Erfindung ist, dass das Fahrerassistenzsystem den Kraftwagen auch dann sicher zum Stehen bringen kann, wenn beispielsweise die Videokamera das Vorderfahrzeug nicht mehr erfassen kann, weil der Kraftwagen zu stark schlingert oder nickt, und dadurch ein redundantes Erfassen von Vorderfahrzeug-Fahrdaten scheitert.

Im Rahmen der folgenden Beschreibung wird unter einer Fahrgeschwindigkeitserfassungsvorrichtung insbesondere ein Tachometer oder Tachograph verstanden. Die Fahrgeschwindigkeitserfassungsvorrichtung kann alternativ oder additiv auch durch eine Vorrichtung eines Bremssystems des Kraftwagens gebildet sein, die die Fahrgeschwindigkeit aus Raddrehzahlen ermittelt.

Unter einer Vorderfahrzeug-Erfassungsvorrichtung wird insbesondere ein jeglicher Sensor verstanden, der ausgebildet und dafür vorgesehen ist, um ein relevantes Vorderfahrzeug des Kraftwagens zu detektieren, das heißt, als ein Vorderfahrzeug zu identifizieren oder von diesem Daten zu erfassen, wie beispielsweise dessen Abstand zum Kraftwagen.

Unter Bremsauslöse-Fahrdaten werden insbesondere Fahrdaten verstanden, die Bewegungszustände des Kraftwagens absolut oder relativ zu dem Vorderfahrzeug beschreiben und bei deren Vorliegen eine autonome Bremsung durchgeführt werden soll. So werden Fahrdaten beispielsweise dann zu Bremsauslöse-Fahrdaten, wenn sie jenseits eines vorbestimmten Grenzwerts liegen. Fällt beispielsweise das kontinuierlich gemessene Fahrdatum Abstand unter einen Mindestabstand, so dass eine autonome Bremsung eingeleitet werden soll, so wird der entsprechende Abstand ein Bremsauslöse-Fahrdatum.

Unter Bremsabbruch-Fahrdaten werden insbesondere Daten verstanden, bei deren Vorliegen die autonome Bremsung abgebrochen werden soll.

Unter Vorderfahrzeug-Fahrdaten werden insbesondere Daten verstanden, die einen Bewegungszustand des Vorderfahrzeugs absolut oder relativ zum Kraftwagen beschreiben. Hiezu können auch eine Vorderfahrzeug-ID oder die Relativgeschwindigkeit zum Kraftwagen gehören. Die Vorderfahrzeug-Fahrdaten sind auch Fahrdaten.

Unter der Bedingung, dass die nicht redundant erfassten Vorderfahrzeug-Fahrdaten den redundant erfassten Vorderfahrzeug-Fahrdaten entsprechen, ist insbesondere zu verstehen, dass die jeweiligen Daten sich voneinander nur um eine vorgegebene relative oder absolute Abweichung unterscheiden.

Die Vorderfahrzeug-Erfassungsvorrichtung ist bevorzugt ausgebildet, um relevante Vorderfahrzeuge zu erfassen. Ein relevantes Vorderfahrzeug ist ein Vorderfahrzeug, das sich im Bewegungspfad des Kraftwagens befindet.

Unter einer elektrischen Ansteuereinheit wird insbesondere jede Recheneinheit verstanden, die Baugruppen des Kraftwagens steuert oder einen Prozess regelt. Es ist dabei möglich, nicht aber notwendig, dass die elektrische Ansteuereinheit aus mehreren Teileinheiten besteht. So kann beispielsweise allen im folgenden genannten Fahrdatensensoren oder übrigen Sensoren eine Auswerteeinheit angegliedert sein, die Messdaten vorverarbeitet und kodiert an eine Haupt-Ansteuereinheit sendet.

Es ist zudem möglich, dass die Vorderfahrzeug-Erfassungsvorrichtung und Vorderfahrzeuggeschwindigkeits-Erfassungsvorrichtung in einer einzigen Vorrichtung zusammengefasst sind. Für die vorliegende Erfindung ist es nicht relevant, wie einzelne Funktionalitäten auf zugeordnete Vorrichtungen aufgeteilt sind. So ist es möglich, dass die Vorderfahrzeug-Erfassungsvorrichtung so viele Daten ermittelt, dass daraus auch die Vorderfahrzeuggeschwindigkeit des Vorderfahrzeugs ermittelt werden kann. In diesem Fall ist die Vorderfahrzeuggeschwindigkeits-Ermittlungsvorrichtung Teil der Vorderfahrzeug-Erfassungsvorrichtung.

Beispielsweise kann die Vorderfahrzeug-Erfassungsvorrichtung eingerichtet sein, um den Abstand des Kraftwagens zum Vorderfahrzeug in regelmäßigen Zeitabständen zu ermitteln und aus der zeitlichen Änderung der Abstandsdaten eine Relativgeschwindigkeit zum Vorderfahrzeug zu errechnen. So ergibt sich die Vorderfahrzeuggeschwindigkeit als Vektorsumme aus der Fahrgeschwindigkeit und einer Relativgeschwindigkeit zwischen dem Kraftwagen und dem Vorderfahrzeug. In diesem Fall ist die Vorderfahrzeuggeschwindigkeits-Ermittlungsvorrichtung Teil der Vorderfahrzeug-Erfassungsvorrichtung.

Unter einem redundanten Erfassen der Vorderfahrzeug-Fahrdaten wird insbesondere verstanden, dass mindestens zwei Komponenten der Vorderfahrzeug-Erfassungsvorrichtung das Vorderfahrzeug gleichzeitig erfassen und dass das Vorderfahrzeug erkannt wird. Unter einem Ausfallen einer Komponente wird insbesondere jedes Ereignis verstanden, das dazu führt, dass die Komponente keine verwertbaren Signale mehr liefert. Das kann seine Ursache beispielsweise darin haben, dass die Komponente zerstört ist oder dass der Kraftwagen so stark schlingert oder nickt, dass die erhaltenen Daten nicht mehr auswertbar sind.

Unter einem Abstandssensor wird jede Vorrichtung verstanden, die ausgebildet und angeordnet ist, um einen Abstand zu einem Vorderfahrzeug zu ermitteln. Beispielsweise umfasst der Abstandssensor einen Lasersensor und/oder einen Radarsensor.

In diesem Fall kann beispielsweise der Abstandssensor noch Abstandsdaten liefern, die Videokamera ist aber ausgefallen, so dass nicht sichergestellt ist, dass sich die Abstandsdaten auf das Vorderfahrzeug beziehen. In diesem Fall sind die vom Abstandssensor erfassten Abstandsdaten nichtredundant.

Unter dem Vergleichen von nicht redundant erfassten Vorderfahrzeug-Fahrdaten mit innerhalb einer vorgegebenen Zeit redundant erfassten Vorderfahrzeug-Fahrdaten wird insbesondere verstanden, dass eine Abweichung beider Vorderfahrzeug-Fahrdaten ermittelt und mit einem vorgegebenen Schwellenwert verglichen wird. Liegen beide Vorderfahrzeug-Fahrdaten beispielsweise um weniger als 5% auseinander, so wird angenommen, dass der Abstandssensor noch den Abstand zum Vorderfahrzeug misst und nicht etwa den Abstand zu einem anderen Objekt. Die vorgegebene Zeit kann beispielsweise unter einer Sekunde liegen. Zur Beurteilung, ob das redundante Erfassen der Vorderfahrzeug-Fahrdaten unmöglich geworden ist, können auch die Vorderfahrzeug-ID und die Relativgeschwindigkeit herangezogen werden. So kann vorgesehen sein, dass eine das redundante Erfassen als möglich betrachtet wird, wenn die Vorderfahrzeug-ID (Identifikationsnummer) des erfassten Objekts die gleiche bleibt. In einer bevorzugten Ausführungsform ist die elektrische Ansteuereinheit ausgebildet zum Durchführen eines Verfahrens, dass dann, wenn zumindest eine der Komponenten ausfällt, so dass ein redundantes Erfassen der Vorderfahrzeug-Fahrdaten unmöglich wird, ein nichtredundantes Erfassen aber möglich ist, die zusätzlichen Schritte eines Ermitteln, ob ein zuletzt erfasster Abstand des Vorderfahrzeugs zum Kraftwagen einen vorgegebenen Mindestabstand unterschreitet und bejahendenfalls eines Unterdrücken eines Abbruchs der autonomen Bremsung durchführt. So wird ein vorzeitiges Abbrechen der autonomen Bremsung vermieden.

In anderen Worten wird in Situationen, in denen ein redundantes Erfassen nicht möglich ist und sich der Kraftwagen bereits mit einer hohen Wahrscheinlichkeit bereits im Zustand einer autonomen Bremsung befindet, weil der Mindestabstand zum Vorderfahrzeug unterschritten wurde, die autonome Bremsung weiter aufrecht erhalten. So wird verhindert, dass ein Abbrechen der autonomen Bremsung nur wegen fehlender Fahrdaten ein Sicherheitsrisiko darstellen kann.

Der vorgegebene Mindestabstand ist grundsätzlich frei wählbar. Es hat sich jedoch herausgestellt, dass Abstände von unter 3 m, insbesondere von weniger als 2 m, gut geeignet sind.

In einer bevorzugten Ausführungsform ist die elektrische Ansteuereinheit ausgebildet zum Durchführen eines Verfahrens mit den zusätzlichen Schritten: wenn nach dem redundanten Erfassen des Vorderfahrzeugs alle Komponenten der Vorderfahrzeug-Erfassungsvorrichtung ausfallen, (i) Extrapolieren des Abstands zu dem Vorderfahrzeug und der Vorderfahrzeug-Geschwindigkeit und (ii) Verwenden des extrapolierten Abstands und/oder der extrapolierten Vorderfahrzeug-Geschwindigkeit als Fahrdaten für die Prüfung, ob die vorbestimmten Bremsauslöse-Fahrdaten und/oder Bremsabbruch-Fahrdaten vorliegen. Der Abstand und die Vorderfahrzeuggeschwindigkeit werden insbesondere aus früheren Messdaten extrapoliert, die in einem digitalen Speicher der Ansteuereinheit abgelegt worden sind.

In anderen Worten werden der Abstand und die Vorderfahrzeuggeschwindigkeit dann (und insbesondere nur dann) für die Prüfung, ob die vorbestimmten Bremsauslöse-Fahrdaten und/oder Bremsabbruch-Fahrdaten vorliegen, verwendet, wenn keine anderen, besseren (nämlich redundanten) Messdaten vorliegen. Hierdurch kann es zwar dazu kommen, dass die autonome Bremsung nicht abgebrochen wird, obwohl sie abgebrochen werden könnte, so dass grundlos in die Autonomie des Fahrers eingegriffen wird. Dieser Nachteil wird aber durch den Vorteil überkompensiert, dass die autonome Bremsung nicht abgebrochen wird, nur weil entsprechende Fahrdaten fehlen, obwohl das zu einer erhöhten Unfallschwere oder überhaupt zu einem Unfall führt.

Bevorzugt ist die elektrische Ansteuereinheit so ausgeführt, dass sie den Abbruch der autonomen Bremsung so lange unterdrückt, bis der Kraftwagen steht. Alternativ oder additiv endet das Unterdrücken des Abbruchs der autonomen Bremsung dann, wenn das Vorderfahrzeug redundant erfasst wird und die Fahrdaten den Bremsabbruch-Fahrdaten entsprechen.

Die Erfindung löst das Problem zudem durch einen Kraftwagen mit einem erfindungsgemäßen Fahrerassistenzsystem. Der Kraftwagen kann beispielsweise ein Nutzfahrzeug sein.

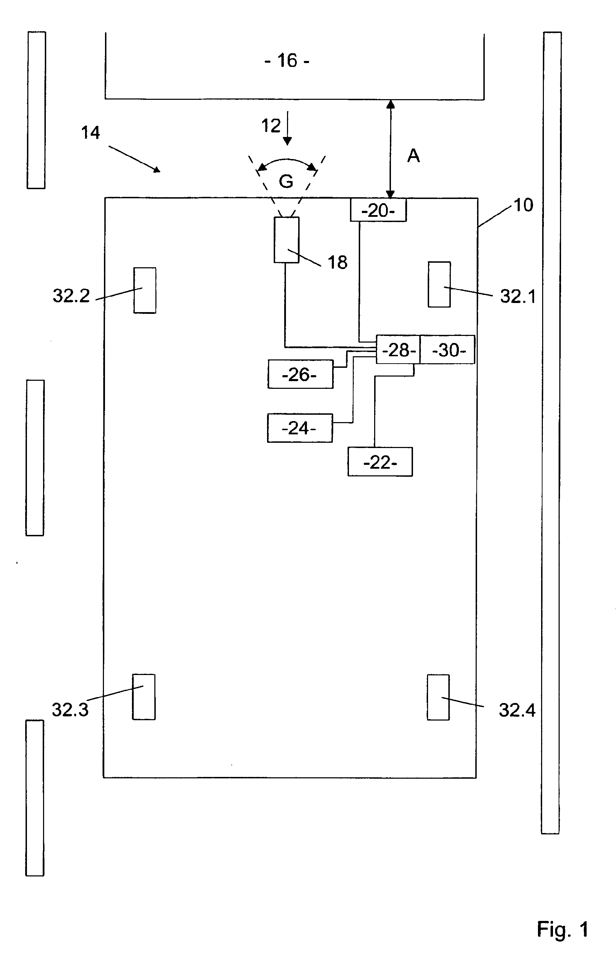

Im Folgenden wird die Erfindung anhand eines exemplarischen Ausführungsbeispiels anhand der beigefügten Zeichnung näher erläutert. Dabei zeigt
- Figur 1: eine schematische Ansicht eines erfindungsgemäßen Kraftwagens mit einem erfindungsgemäßen Fahrerassistenzsystem.

Figur 1 zeigt einen Kraftwagen 10, der eine Vorderseite 12 aufweist, an der eine Vorderfahrzeug-Erfassungsvorrichtung 14 angeordnet ist. Die Vorderfahrzeug-Erfassungsvorrichtung 14 ist ausgebildet, um ein Vorderfahrzeug 16 zu erfassen und besitzt eine erste Komponente in Form einer Videokamera 18 mit einem Gesichtsfeld G und eine zweite Komponente in Form eines Abstandssensor 20. Der Abstandssensor 20 ist ausgebildet, um einen Abstand A zwischen der Vorderseite 12 des Kraftwagens 10 und einer Rückseite des Vorderfahrzeugs 16 zu vermessen.

Der Kraftwagen 10 besitzt zudem eine Fahrgeschwindigkeits-Erfassungsvorrichtung 22 in Form eines Tachometers, einen Gierratensensor 24 und einen Verzögerungssensor 26. Die Vorderfahrzeug-Erfassungsvorrichtung 14, die FahrgeschwindigkeitsErfassungsvorrichtung 22, der Gierratensensor 24 und der Verzögerungssensor 26 sind Fahrdaten-Sensoren, die Fahrdaten des Kraftwagens 10 erfassen. Diese sind alle mit einer elektrischen Ansteuereinheit 28 mittels Kabeln verbunden. Die elektrische Ansteuereinheit 28 umfasst einen digitalen Speicher 30, in dem von den Fahrdaten-sensoren erfasste Messdaten gepuffert abgespeichert werden können.

Der Abstandssensor 20 fungiert zusammen mit der Fahrgeschwindigkeits-Erfassungsvorrichtung 22 und der elektrischen Ansteuereinheit 28 als Vorderfahrzeuggeschwindigkeits-Ermittlungsvorrichtung zum Ermitteln einer Vorderfahrzeuggeschwindigkeit v_{Vf}. Um die Vorderfahrzeuggeschwindigkeit v_{Vf} zu ermitteln, misst der Abstandssensor 20 in einem zeitlichen Abstand von beispielsweise 100 m/s den Abstand A und errechnet daraus eine Relativgeschwindigkeit vᵣₑₗₐₜᵢᵥ zwischen dem Kraftwagen 10 und dem Vorderfahrzeug 16. Die Relativgeschwindigkeit vᵣₑₗₐₜᵢᵥ wird zu einer Fahrgeschwindigkeit v_{K} des Kraftwagens 10 addiert, so dass sich die Vorderfahrzeuggeschwindigkeit v_{Vf} ergibt.

Auf der elektrischen Ansteuereinheit läuft ein Verfahren, das beständig die Abstandswerte A vom Abstandssensor 20 erfasst. Gleichzeitig werden von der Videokamera 18 Bilddaten erhalten und mittels Bilderkennung daraufhin untersucht, ob ein Vorderfahrzeug 16 vorhanden ist. Ist das der Fall, wird dem Vorderfahrzeug 16 eine Vorderfahrzeug-ID zugewiesen. Gleichzeitig wird der jeweilige Abstand A und die jeweilige Vorderfahrzeuggeschwindigkeit v_{Vf} mit der Vorderfahrzeug-ID verknüpft. Die Vorderfahrzeug-ID, der Abstand und die Vorderfahrzeuggeschwindigkeit v_{Vf} sind Vorderfahrzeugdaten und stellen ebenfalls Fahrdaten dar.

Die elektrische Ansteuereinheit 28 vergleicht einkommende Daten mit im digitalen Speicher 30 abgelegten Bremsauslöse-Fahrdaten. Wird eine hinreichend große Übereinstimmung gefunden, so löst die elektrische Ansteuereinheit 28 eine autonome Bremsung des Kraftwagens 10 aus, indem sie Bremsen 32.1, 32.2, 32.3., 32.4 ein elektrisches Brems-Signal über eine nicht eingezeichnete Busleitung schickt, woraufhin die Bremsen 32 den Kraftwagen 10 abbremsen.

Solange die Videokamera 18 und der Abstandssensor 20 das Vorderfahrzeug 16 als vor dem Kraftwagen 10 fahrendes Vorderfahrzeug erfassen, liegt eine redundante Erfassung des Vorderfahrzeugs 16 vor. Das heißt, dass davon ausgegangen werden kann, dass der Abstand A tatsächlich ein Abstand zu einem Vorderfahrzeug ist und nicht etwa ein Abstand zu einem anderen Objekt vor dem Kraftwagen 10, beispielsweise einer Leitplanke. Während der autonomen Bremsung kann es dazu kommen, dass die Videokamera 18 das Vorderfahrzeug 16 nicht mehr erfassen kann, beispielsweise weil die Relativbewegung zwischen dem Kraftwagen 10 und dem Vorderfahrzeug 16 so groß ist, dass die Bildauswertung nicht mehr stabil gelingt. In diesem Fall fällt die Videokamera 18 als erste Komponente der Vorderfahrzeug-Erfassungsvorrichtung 14 aus, der Abstandssensor 20 liefert hingegen weiterhin Abstandsdaten. In diesem Fall wird von der elektrischen Ansteuereinheit 28 ermittelt, ob ein zuletzt redundant erfasster Abstand A_{redundant} kleiner ist als ein vorgegebener Mindestabstand A_{mindest} von beispielsweise 2 m. Ist das nicht der Fall, war also der zuletzt sowohl von der Videokamera 18 als auch vom Abstandssensor 20 erfasste Abstand A_{redundant} kleiner als der Mindestabstand A_{mindest}, so wird ein Abbruch der im Verlauf befindlichen autonomen Bremsung so lange unterdrückt, bis entweder der Kraftwagen 10 steht oder bis wieder ein redundant erfasster Abstand ermittelt wird.

Es kann vorgesehen sein, dass dann, wenn eine autonome Bremsung durchgeführt wird und die Videokamera 14 das Vorderfahrzeug 16 nicht mehr erfassen kann, beispielsweise weil sich das Vorderfahrzeug 16 so stark dem Kraftwagen 10 angenähert hat, ein Erfassen nicht mehr möglich ist. Das kann beispielsweise dazu führen, dass aufgrund der Daten von der Videokamera 18 eine weitere Vorderfahrzeug-ID erzeugt wird, so dass der Eindruck entsteht, dass zwei Objekte vorhanden sind, obwohl es sich beides Mal um das Vorderfahrzeug 16 handelt. In diesem Fall wird von dem Abstandssensor 20 ein Vorderobjekt erfasst und die elektrische Ansteuereinheit 28 weist diesen Daten eine Vorderobjekt-ID zu. Es wird dann beständig ermittelt, ob diese Vorderobjektdaten den Vorderfahrzeugdaten entsprechen. Hierunter ist zu verstehen, dass die Vorderobjektdaten, von denen noch nicht sicher ist, welchem realen Objekt sie zuzuordnen sind, mit denjenigen redundant erfassten Vorderfahrzeugdaten, die vorher erfasst worden sind, verglichen werden. Wird eine hinreichend hohe Ähnlichkeit festgestellt, werden die Vorderobjektdaten als Fahrdaten für die Prüfung verwendet, ob die vorbestimmten Bremsabbruch-Fahrdaten vorliegen. In anderen Worten wird angenommen, dass das Vorderobjekt, das vom Abstandssensor 20 erfasst wird, weiterhin das Vorderfahrzeug 16 ist. Es werden dann die zu diesem Objekt ermittelten Fahrdaten verwendet um diese mit den vorbestimmten Bremsabbruch-Fahrdaten zu vergleichen.

Wenn die elektrische Ansteuereinheit 28 von der Videokamera 18 und dem Abstandssensor 20 keine Daten empfängt, die eine Ermittlung des Abstands A gestatten, so extrapoliert sie den Abstand A und die Vorderfahrzeuggeschwindigkeit v_{Vf} anhand der letzten gemessenen Daten. Die so extrapolierten Fahrdaten werden dann mit den vorbestimmten Bremsabbruch-Fahrdaten verglichen und die autonome Bremsung gegebenenfalls abgebrochen.

## Patentansprüche

1. Fahrerassistenzsystem für einen Kraftwagen, mit
(a) einer Fahrgeschwindigkeits-Erfassungsvorrichtung (22) zum Erfassen von Fahrdaten in Form einer Fahrgeschwindigkeit (v_{K}) des Kraftwagens (10),
(b) einer Vorderfahrzeug-Erfassungsvorrichtung (14), die
- als eine erste Komponente zumindest eine Videokamera (18) und
- als eine zweite Komponente zumindest einen Abstandssensor (20), zum Erfassen von Fahrdaten in Form eines Abstands (A) zu einem vor dem Kraftwagen (10) fahrenden Vorderfahrzeug (16) umfasst,
(c) einer Vorderfahrzeuggeschwindigkeits-Ermittlungsvorrichtung zum Ermitteln von Fahrdaten in Form einer Vorderfahrzeuggeschwindigkeit (v_{Vf}) des Vorderfahrzeugs (16) und
(d) einer elektrische Ansteuereinheit (28), die eingerichtet ist, um
- beim Vorliegen von vorbestimmten Bremsauslöse-Fahrdaten eine autonome Bremsung des Kraftwagens (10) auszulösen und
- beim Vorliegen von vorbestimmten Bremsabbruch-Fahrdaten die autonome Bremsung des Kraftwagens (10) zu beenden,
**dadurch gekennzeichnet, dass**
(e) die elektrische Ansteuereinheit (28) eingerichtet ist zum Durchführen eines Verfahrens mit den Schritten
(i) redundantes Erfassen von Vorderfahrzeug-Fahrdaten (A, v_{Vf}) des Vorderfahrzeugs (15) und
(ii) wenn ein redundantes Erfassen der Vorderfahrzeug-Fahrdaten (A, v_{Vf}) unmöglich wird,
- nicht redundantes Erfassen der Vorderfahrzeug-Fahrdaten (A, v_{Vf}),
- Vergleichen der nicht redundant erfassten Vorderfahrzeug-Fahrdaten mit innerhalb einer vorgegebenen Zeit (t) redundant erfassten Vorderfahrzeug-Fahrdaten und
- wenn die nicht redundant erfassten Vorderfahrzeug-Fahrdaten den redundant erfassten Vorderfahrzeug-Fahrdaten entsprechen, Verwenden der nicht redundant erfassten Vorderfahrzeug-Fahrdaten, um Schritt (d) durchzuführen.

2. Fahrerassistenzsystem nach Anspruch 1, **dadurch gekennzeichnet, dass** die elektrische Ansteuereinheit (28) ausgebildet ist zum Durchführen eines Verfahrens mit den zusätzlichen Schritten:
wenn zumindest eine der Komponenten (18, 20) ausfällt, so dass ein redundantes Erfassen der Vorderfahrzeug-Fahrdaten (A, v_{Vf}) unmöglich wird,
(i) Ermitteln, ob ein zuletzt erfasster Abstand (A) des Vorderfahrzeugs (16) zum Kraftwagen (10) einen vorgegebenen Mindestabstand (A_{mindest}) unterschreitet, und
(ii) bejahendenfalls Unterdrücken eines Abbruchs der autonomen Bremsung.

3. Fahrerassistenzsystem nach einem der vorstehenden Ansprüche, **dadurch gekennzeichnet, dass** die elektrische Ansteuereinheit ausgebildet ist zum Durchführen eines Verfahrens mit den zusätzlichen Schritten:
wenn nach dem redundanten Erfassen des Vorderfahrzeugs alle Komponenten (18, 20) der Vorderfahrzeug-Erfassungsvorrichtung (14) ausfallen,
- Extrapolieren des Abstands (A) zu dem Vorderfahrzeug (16) und der Vorderfahrzeuggeschwindigkeit (v_{Vf}) und
- Verwenden des extrapolierten Abstands (A) und/oder der extrapolierten Vorderfahrzeuggeschwindigkeit (v_{Vf}), um Schritt (d) durchzuführen.

4. Fahrerassistenzsystem nach einem der vorstehenden Ansprüche, **dadurch gekennzeichnet, dass** die elektrische Ansteuereinheit dadurch zum Erfassen, ob zumindest eine der Komponenten Vorderfahrzeug-Erfassungsvorrichtung ausgefallen ist, ausgebildet ist, indem erfasst wird, ob die Videokamera (18) Signale abgibt und kein Vorderfahrzeug (16) erfasst.

5. Kraftwagen mit einem Fahrerassistenzsystem nach einem der vorstehenden Ansprüche.

## Claims

1. Driver assistance system for a motor vehicle, having
(a) a speed detection device (22) for detecting driving data in the form of a speed (v_{K}) of the motor vehicle (10),
(b) a preceding vehicle detection device (14), which comprises
- at least one video camera (18) as a first component and
- at least one distance sensor (20) as a second component,
for detecting driving data in the form of a distance (A) from a preceding vehicle (16) driving in front of the motor vehicle (10),
(c) a preceding vehicle speed determination device for determining driving data in the form of a preceding vehicle speed (v_{vf}) of the preceding vehicle (16) and
(d) an electric actuation unit (28) which is configured
- to trigger autonomous braking of the motor vehicle (10) when predetermined brake trigger driving data are present, and
- to terminate autonomous braking of the motor vehicle (10) when predetermined brake abort driving data are present,
**characterized in that**
(e) the electric actuation unit (28) is configured to carry out a method having the steps
(i) redundant detection of preceding vehicle driving data (A, v_{vf}) of the preceding vehicle (15), and
(ii) if redundant detection of the preceding vehicle driving data (A, v_{vf}) is impossible,
- non-redundant detection of the preceding vehicle driving data (A, v_{vf}),
- comparison of the non-redundantly detected preceding vehicle driving data with preceding vehicle driving data which are detected redundantly within a predefined time (t), and
- if the non-redundantly detected preceding vehicle driving data correspond to the redundantly detected preceding vehicle driving data, use of the non-redundantly detected preceding vehicle driving data in order to carry out step (d).

2. Driver assistance system according to claim 1, **characterized in that** the electric actuation unit (28) is designed to carry out a method having the additional steps:
if at least one of the components (18, 20) fails so that redundant detection of the preceding vehicle driving data (A, v_{vf}) becomes impossible,
(i) determination whether a last-detected distance (A) of the preceding vehicle (16) from the motor vehicle (10) undershoots a predefined mean distance (Aₘᵢₙ), and
(ii) if this is the case, suppression of an abort of the autonomous braking.

3. Driver assistance system according to one of the preceding claims, **characterized in that** the electric actuation unit is designed to carry out a method having the additional steps:
if all the components (18, 20) of the preceding vehicle detection device (14) fail after the redundant detection of the preceding vehicle,
- extrapolation of the distance (A) from the preceding vehicle (16) and of the preceding vehicle speed (v_{vf}), and
- use of the extrapolated distance (A) and/or of the extrapolated preceding vehicle speed (v_{vf}) in order to carry out step (d).

4. Driver assistance system according to one of the preceding claims, **characterized in that** the electric actuation unit is designed to detect whether at least one of the components of the preceding vehicle detection device has failed by detecting whether the video camera (18) outputs signals and does not detect a preceding vehicle (16).

5. Motor vehicle having a driver assistance system according to one of the preceding claims.

## Revendications

1. Système d'assistance au conducteur pour une automobile, comprenant
(a) un dispositif d'acquisition de la vitesse de déplacement (22) pour acquérir des données de déplacement sous la forme d'une vitesse de déplacement (v_{K}) de l'automobile (10),
(b) un dispositif de détection de véhicule qui précède (14), lequel inclut
- comme premier composant au moins une caméra vidéo (18) et
- comme deuxième composant au moins un détecteur de distance (20),
pour acquérir des données de déplacement sous la forme d'une distance (A) par rapport à un véhicule qui précède (16) qui se déplace devant l'automobile (10),
(c) un dispositif d'acquisition de vitesse de véhicule qui précède pour déterminer des données de déplacement sous la forme d'une vitesse de véhicule qui précède (v_{vf}) du véhicule qui précède (16) et
(d) une unité de commande électrique (28) qui est conçue pour
- en présence de données de déplacement prédéfinies de déclenchement de freinage, déclencher un freinage autonome de l'automobile (10) et
- en présence de données de déplacement prédéfinies d'interruption de freinage, mettre fin au freinage autonome de l'automobile (10),
**caractérisé en ce que**
(e) l'unité de commande électrique (28) est conçue pour mettre en oeuvre un procédé comprenant les étapes suivantes
(i) acquisition redondante de données de déplacement de véhicule qui précède (A, v_{vf}) du véhicule qui précède (15) et
(ii) lorsqu'une acquisition redondante des données de déplacement de véhicule qui précède (A, v_{vf}) est impossible,
- acquisition non redondante des données de déplacement de véhicule qui précède (A, v_{vf}),
- comparaison des données de déplacement de véhicule qui précède acquises de manière non redondante avec des données de déplacement de véhicule qui précède acquises de manière redondante pendant une durée (t) prédéfinie et
- lorsque les données de déplacement de véhicule qui précède acquises de manière non redondante correspondent aux données de déplacement de véhicule qui précède acquises de manière redondante, utilisation des données de déplacement de véhicule qui précède acquises de manière non redondante pour exécuter l'étape (d).

2. Système d'assistance au conducteur selon la revendication 1, **caractérisé en ce que** l'unité de commande électrique (28) est conçue pour mettre en oeuvre un procédé comprenant les étapes supplémentaires suivantes :
lorsqu'au moins l'un des composants (18, 20) tombe en panne de sorte qu'une acquisition redondante des données de déplacement de véhicule qui précède (A, v_{vf}) devient impossible,
(i) détermination de si une distance (A) acquise en dernier entre le véhicule qui précède (16) et l'automobile (10) est inférieure à une distance minimale (A_{mindest}) prédéfinie, et
(ii) dans l'affirmative, inhibition d'une interruption du freinage autonome.

3. Système d'assistance au conducteur selon l'une des revendications précédentes, **caractérisé en ce que** l'unité de commande électrique est conçue pour mettre en oeuvre un procédé comprenant les étapes supplémentaires suivantes :
si, après l'acquisition redondante du véhicule qui précède, tous les composants (18, 20) du dispositif de détection de véhicule qui précède (14) tombent en panne,
- extrapolation de la distance (A) par rapport au véhicule qui précède (16) et de la vitesse de véhicule qui précède (v_{vf}), et
- utilisation de la distance (A) extrapolée et/ou de la vitesse de véhicule qui précède (v_{Vf}) extrapolée pour exécuter l'étape (d).

4. Système d'assistance au conducteur selon l'une des revendications précédentes, **caractérisé en ce que** l'unité de commande électrique est conçue pour détecter si au moins l'un des composants du dispositif de détection de véhicule qui précède est tombé en panne **en ce qu'**elle détecte si la caméra vidéo (18) délivre des signaux et ne détecte aucun véhicule qui précède (16).

5. Automobile équipée d'un système d'assistance au conducteur selon l'une des revendications précédentes.
